# EUROPEAN PATENT APPLICATION

(11) **EP 4 024 600 A1**
(43) Date of publication of application: **06.07.2022**
(21) Application number: 21772555.5
(22) Date of filing: 20.01.2021
(51) Int. Cl.: H01M 50/571, H01M 50/531, H01M 4/66, H01M 10/052, H01M 4/13, H01M 4/02

(54) **POSITIVE ELECTRODE CURRENT COLLECTOR HAVING CONDUCTIVE ANTI-CORROSION LAYER FORMED ON TAB, POSITIVE ELECTRODE COMPRISING SAME, AND LITHIUM SECONDARY BATTERY**

(30) Priority: 19.03.2020 KR 20200034072; 08.01.2021 KR 20210002734
(71) Applicant: LG ENERGY SOLUTION, LTD., Seoul 07335 (KR)
(72) Inventor: YUN, Hyunwoong, Daejeon 34122 (KR); HWANG, Sunwook, Daejeon 34122 (KR); HAH, Hoejin, Daejeon 34122 (KR)
(74) Representative: Hoffmann Eitle
(86) International application number: PCT/KR2021/095008
(87) International publication number: WO 2021/187965

(57) **Abstract**

The present disclosure relates to a positive electrode current collector for a lithium secondary battery including a tab extended from a positive electrode current collector substrate, wherein an anti-corrosion layer made of one selected from the group consisting of a primer layer, a conductive polymer layer, and a conductive epoxy layer is formed over the entire surface of the tab, a positive electrode including the same, and a lithium secondary battery.

## Description

### [TECHNICAL FIELD]

### Cross Citation with Related Application(s)

This application claims the benefit of Korean Patent Application No. 10-2020-0034072 filed on March 19, 2020 and Korean Patent Application No. 10-2021-0002734 filed on January 8, 2021 in the Korean Intellectual Property Office, each of which is incorporated herein by reference in its entirety.

The present disclosure relates to a positive electrode current collector having a conductive anti-corrosion layer formed on the tab, a positive electrode including the same, and a lithium secondary battery.

### [BACKGROUND ART]

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibits high charge/discharge characteristics and lifetime characteristics and is environmentally friendly, and has been commercialized and widely used.

Such a lithium secondary battery has a structure in which a non-aqueous electrolyte is impregnated in an electrode assembly consisting of a positive electrode, a negative electrode, and a porous separator. The positive electrode is generally manufactured by coating an aluminum foil with a positive electrode mixture containing a positive electrode active material, and the negative electrode is manufactured by coating a copper foil with a negative electrode mixture containing a negative electrode active material.

However, in general, the aluminum foil used as a positive electrode current collector may cause a side reaction with a lithium salt of a lithium non-aqueous electrolyte or a non-aqueous solvent. In particular, when an imide-based lithium salt is used as a lithium salt of a lithium non-aqueous electrolyte, the aluminum foil reacts with the imide salt to form an Al salt, and such Al salt is dissolved in a non-aqueous solvent and the corrosion of Al is generated.

Therefore, such Al corrosion becomes more severe in the portion of the aluminum foil directly exposed to the lithium non-aqueous electrolyte.

Therefore, there is a high need for a technology that can solve the above problems and thus efficiently prevent corrosion of the Al foil, which is a positive electrode current collector.

### [DETAILED DESCRIPTION OF THE INVENTION]

### [Technical Problem]

Accordingly, the present disclosure has been made to solve the above problems and other technical problems that have yet to be resolved.

Specifically, an object of the present disclosure is to provide a positive electrode current collector in which an anti-corrosion layer is formed on the entire tab surface of the positive electrode current collector where corrosion occurs most frequently, thereby being able to prevent the corrosion that frequently occurs in the tab portion of the positive electrode current collector.

### [Technical Solution]

According to one embodiment of the present disclosure, there is provided a positive electrode current collector for a lithium secondary battery including a tab extended from a positive electrode current collector substrate, wherein an anti-corrosion layer made of one kind selected from the group consisting of a primer layer, a conductive polymer layer, and a conductive epoxy layer is formed over the entire surface of the tab.

In another embodiment, the positive electrode current collector includes an anti-corrosion layer made of one kind selected from the group consisting of a primer layer, a conductive polymer layer, and a conductive epoxy layer which is further formed on a part or all of at least one surface of the positive electrode current collector substrate.

Wherein, the primer layer may include:
at least one conductive material selected from the group consisting of natural graphite, artificial graphite, graphene, carbon black, channel black, furnace black, lamp black, thermal black, carbon nanotube, graphite nanofiber, carbon nanofiber, aluminum, nickel, and a polyphenylene derivative, and
a binding material.

Wherein, the binding material may be at least one selected from the group consisting of polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butylene rubber, and fluorine rubber.

Further, the conductive material and the binding material may be contained in a weight ratio of 1:99 to 99:1.

The conductive polymer layer may include at least one conductive polymer selected from the group consisting of poly(3,4-ethylenedioxythiophene)/poly(4-styrene sulfonate) (PEDOT/PSS), polyaniline (PANI), polypyrrole (PPy), polythiophene (PT), polyacetylene (PA), and poly para-phenylene vinylene (PPV).

The conductive epoxy layer may include:
at least one conductive filler selected from the group consisting of metal powder of gold, platinum, silver, copper, or nickel, carbon or carbon fiber, graphite, and composite powder thereof, and
a binder.

Wherein, the binder may be at least one selected from the group consisting of acrylic-based, epoxy-based, polyurethane-based, silicon-based, polyimide-based, phenolic-based, polyester-based polymer materials, composite polymer resins thereof, and low melting point glass.

The conductive filler and the binder may be contained in a weight ratio of 1:99 to 99: 1.

A thickness of formation of the anti-corrosion layer may be 0.1 *µ*m to 100 *µ*m.

Meanwhile, the positive electrode current collector may include Al.

According to yet another embodiment of the present disclosure, a positive electrode having a positive electrode mixture layer formed on at least one surface of the positive electrode current collector is provided, and also a lithium secondary battery having a structure in which an electrode assembly is impregnated with a lithium non-aqueous electrolyte, the electrode assembly comprising: the positive electrode; a negative electrode having a negative electrode mixture layer formed on at least one surface of the negative electrode current collector; and a separator interposed between the positive electrode and negative electrode.

The lithium non-aqueous electrolyte may include a lithium salt and a non-aqueous solvent. The corrosion of the positive electrode current collector occurs more actively when the lithium salt already contains an imide-based lithium salt, and therefore, it is more preferable if the anti-corrosion layer is formed with such a composition. Therefore, the lithium salt in the lithium non-aqueous electrolyte according to the present disclosure may include an imide-based salt selected from the group consisting of lithium bis(fluorosulfonyl)imide (LiFSI), lithium bis(trifluoromethanesulfonyl)imide (LiTFSI), lithium bis(perfluoroethylsulfonyl)imide (LiBETI), lithium (fluorosulfonyl)(nonafluorobutanesulfoyl)imide (LiFNFSI), lithium (fluorosulfonyl)(trifluoromethanesulfonyl)imide (LiFTI or LiFTA) .

Meanwhile, the lithium secondary battery may be lithium ion battery, lithium polymer battery, lithium metal battery, or lithium-free battery.

### [DETAILED DESCRIPTION OF THE EMBODIMENTS]

Hereinafter, the present disclosure will be described in more detail for a better understanding of the present disclosure.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

According to one embodiment of the present disclosure, there is provided a positive electrode current collector for a lithium secondary battery including a tab extended from a positive electrode current collector substrate, wherein an anti-corrosion layer made of one kind selected from the group consisting of a primer layer, a conductive polymer layer, and a conductive epoxy layer is formed over the entire surface of the tab.

The positive electrode current collector including the positive electrode current collector substrate and the tab is typically fabricated to a thickness of 3 to 500 *µ*m. The positive electrode current collector is not particularly limited as long as a corresponding battery has high conductivity without causing a chemical change in the battery, and for example, stainless steel, aluminum, nickel, copper, tungsten, titanium, titanium, or a material formed by surface-treating a surface of aluminum or stainless with carbon, nickel, titanium, silver, or the like may be used, and specifically, aluminum (Al)-containing ones may be used. Al-containing ones may be made of aluminum (it may contain impurities), or may be an alloy of Al and other metals. The current collector may have fine protrusions and depressions formed on a surface thereof to enhance adherence of a positive electrode active material, and may be formed in various forms such as a film, a sheet, a foil, a net, a porous body, a foaming body, and a non-woven fabric structure.

The tab may be attached to the positive electrode current collector substrate by welding, and when the positive electrode is manufactured, it may be integrally formed by notching a continuous positive electrode sheet, which is coated with the active material of the positive electrode current collector substrate, by a mold at intervals of unit electrodes.

As described above, the positive electrode current collector is subsequently filled with a lithium non-aqueous electrolyte during the manufacturing process of the lithium secondary battery, and these reactions may cause side reactions.

In particular, when a positive electrode current collector containing Al is used as the positive electrode current collector and the lithium non-aqueous electrolyte contains an imide-based salt, the corrosion of the positive electrode current collector is accelerated, so that short circuits may occur and the safety of the secondary battery may be an issue.

Therefore, in the present disclosure, in order to solve these problems, an anti-corrosion layer for physically blocking contact with the electrolyte may be formed on the surface of the positive electrode tab, which is a portion where the positive electrode mixture layer is not formed in the positive electrode current collector and is exposed to the outside.

At this time, if the anti-corrosion layer is formed only on a part of the positive electrode tab, in the area where the anti-corrosion layer is not formed, the possibility of corrosion is still high and, rather, the corrosion may be accelerated, which is not preferable.

However, conventionally, a coating layer such as an insulating layer or a protective layer is formed only on a part of the positive electrode tab, and the end part of the positive electrode tab does not form the coating layer. This is because, when a coating layer is subsequently formed on a portion where the positive electrode tab is welded to the positive electrode lead, such as coating layer can function as a large resistance layer.

On the other hand, according to the present disclosure, even if the entire surface of the tab is coated, an increase in resistance due to welding in a subsequent process of welding with the positive electrode lead can be minimized. Thus, in order to more effectively prevent the positive electrode current collector from corroding, an anti-corrosion layer can be formed over the entire surface of the positive electrode tab.

Furthermore, according to another embodiment of the present disclosure, in order to further protect the positive electrode current collector from contact with the electrolyte, an anti-corrosion layer made of one kind selected from the group consisting of a primer layer, a conductive polymer layer, and a conductive epoxy layer may be further formed even on a part or all of at least one surface of the positive electrode current collector substrate, and specifically, it may be formed over the entire surface of the positive electrode current collector including a tab and a positive electrode current collector substrate.

The anti-corrosion layer may have conductivity in order to be formed on the tab or the positive electrode current collector as a whole as described above, and specifically, may be made of one kind selected from the group consisting of a primer layer, a conductive polymer layer, and a conductive epoxy layer.

Specifically, the primer layer may include a conductive material and a binding material.

Here, the conductive material is not limited to the above materials as long as it is a component capable of maintaining conductivity, and for example, it may include at least one conductive material selected from the group consisting of natural graphite, artificial graphite, graphene, carbon black, channel black, furnace black, lamp black, thermal black, carbon nanotube, graphite nanofiber, carbon nanofiber, aluminum, nickel, and a polyphenylene derivative.

The binding material is used for bonding between the current collector and the primer layer, and is not limited as long as it has a general binding component, and for example, the binding material may be at least one selected from the group consisting of polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butylene rubber, and fluorine rubber.

In this case, the conductive material and the binding material may be contained in a weight ratio of 1:99 to 99:1.

When the content of the conductive material is low outside the above range, the operating characteristics deteriorate as the internal resistance increases. On the contrary, when the content of the binding material is too low, sufficient binding strength of the primer layer cannot be obtained, which is not preferable.

For such a primer layer, a coating film forming method commonly used in the art may be used. For example, the primer layer may be formed by using a wet coating method such as gravure coating, slot die coating, spin coating, spray coating, bar coating and dip coating, or a dry coating method such as thermal evaporation, E-beam evaporation, chemical vapor deposition, and sputtering.

For the conductive polymer layer, polymers commonly known as conductive polymers may be used. For example, the conductive polymer layer may include at least one conductive polymer selected from the group consisting of poly(3,4-ethylenedioxythiophene)/poly(4-styrene sulfonate) (PEDOT/PSS), polyaniline (PANI), polypyrrole (PPy), polythiophene (PT), polyacetylene (PA), and poly para-phenylene vinylene (PPV).

The conductive polymer layer may be formed by preparing a conductive polymer melt or a mixed solution in which these are dissolved in a solvent, and subjecting it to various wet coating methods as described in the coating method of the primer layer. At this time, when the conductive polymer is mixed with a solvent, the solvent may be a polar organic solvent, and for example, chloroform, dichloromethane, m-cresol, tetrahydrofuran (THF), and dimethylformamide (DMF) and the like may be mentioned.

On the other hand, the conductive polymer does not require a separate binder material and the like because the polymer itself exhibits a binding force.

However, for a more rigid binding, it may additionally include a binding material as disclosed in the primer layer, wherein the content thereof may be 0.1 to 10% by weight based on the total weight of the conductive polymer layer.

The conductive epoxy layer may include a conductive filler and a binder.

Here, the conductive filler may be at least one selected from the group consisting of metal powders of gold, platinum, silver, copper, or nickel; carbon or carbon fibers, graphite; and composite powder thereof.

The binder is a component that binds the conductive filler, and is not limited. For example, the binder may be at least one selected from the group consisting of acrylic-based, epoxy-based, polyurethane-based, silicon-based, polyimide-based, phenolic-based, polyester-based polymer materials, composite polymer resins thereof, and low melting point glass.

Meanwhile, the conductive epoxy layer may be classified into a room-temperature drying type, a room-temperature curing type, a heat-curing type, a high-temperature sintering type, and a UV curing type, based on the manufacturing method.

The room-temperature drying type may be formed by incorporating a conductive filler into a binder such as acrylic-based and a solvent, and drying it at room temperature, and the room- temperature curing type is a two-component type and may be formed by additionally containing a highly reactive curing agent and curing a solvent containing a conductive filler and a binder.

Further, the heat-curing type can be formed by applying heat to a solvent containing a conductive filler, mainly using an epoxy-based binder, and the high-temperature sintering type can be formed by curing by heat treatment at a high temperature, and the UV-curable type can be formed by curing by the irradiation with UV.

In this case, the conductive filler and the binder may also be contained in a weight ratio of 1:99 to 99:1, specifically, in a weight ratio of 7:3 to 3:7.

When the content of the conductive filler is too low outside the above range, the conductivity decreases and thus the resistance increases, and when the content of the binder is too low, the binding force of the conductive filler cannot be obtained, which is not preferable.

Meanwhile, the thickness of formation of the anti-corrosion layer may be 0.1 *µ*m to 100 *µ*m, specifically, 0.1 to 30 *µ*m, more specifically, 1 to 20 *µ*m, and most specifically 5 to 20 *µ*m.

When the thickness of the anti-corrosion layer is too thin outside the above range, it is difficult to sufficiently suppress the tab and the positive electrode current collector from being corroded, and it may not be possible to obtain good conductivity, and when the thickness of the anti-corrosion layer is too thick, it can be thicker than the electrode thickness and thus make cell assembly difficult, which is not preferable.

According to another embodiment of the present disclosure, a positive electrode in which a positive electrode mixture layer is formed on at least one surface of the positive electrode current collector is provided.

In general, in the positive electrode, a positive electrode mixture layer including a positive electrode active material, a binder, a conductive material and the like is formed on a positive electrode current collector.

The positive electrode active material may be, for example, a layered compound such as lithium cobalt oxide (LiCoO₂) or lithium nickel oxide (LiNiO₂) or a compound substituted with one or more transition metals; lithium manganese oxides such as chemical formulae Li₁₊ₓMn₂₋ₓO₄ (where x is 0 to 0.33), LiMnO₃, LiMn₂O₃, LiMnO₂; lithium copper oxide (Li₂CuO₂); vanadium oxides such as LiV₃O₈, LiFe₃O₄, V₂O₅, and Cu₂V₂O₇; a Ni-site type lithium nickel oxide represented by chemical formula LiNi₁₋ₓMₓO₂ (where M = Co, Mn, Al, Cu, Fe, Mg, B or Ga, and x= 0.01 ~ 0.3); lithium manganese composite oxide represented by chemical formulae LiMn₂₋ₓMₓO₂ (where M = Co, Ni, Fe, Cr, Zn or Ta, and x = 0.01 to 0.1) or Li₂Mn₃MO₈ (where M = Fe, Co, Ni, Cu or Zn ); LiMn₂O₄ with a Li portion of the chemical formula substituted with an alkaline earth metal ion; a disulfide compound; Fe₂(MoO₄)₃, and the like, but is not limited thereto.

In general, the conductive material is added in an amount of 0.1 to 30% by weight, specifically 1 to 10% by weight, and more specifically 1 to 5% by weight, based on the total weight of the positive electrode mixture layer. The conductive material is not particularly limited as long as a corresponding battery has high conductivity without causing a chemical change in the battery, and for example, graphite such as natural graphite and artificial graphite; carbon blacks such as carbon black, acetylene black, ketjen black, channel black, furnace black, lamp black, and thermal black; conductive fibers such as carbon fiber and metal fiber; metal powders such as carbon fluoride powder, aluminum powder, and nickel powder; conductive whiskey such as zinc oxide and potassium titanate; conductive metal oxides such as titanium oxide; conductive materials such as polyphenylene derivatives may be used.

The binder is a component that assists in coupling of an active material, a conductive material, and the like, and in coupling of a current collector, and typically, may be added in an amount of 0.1 to 30% by weight, specifically 1 to 10% by weight, more specifically 1 to 5% by weight based on the total weight of the positive electrode mixture layer. An example of the binder may include polyvinylidene fluoride, polyvinylidene fluoride-hexafluoropropylene, polyvinyl alcohol, carboxymethyl cellulose (CMC), starch, hydroxypropyl cellulose, regenerated cellulose, polyvinylpyrrolidone, tetrafluoroethylene, polytetrafluoroethylene, polyethylene, polypropylene, ethylene-propylene-diene polymer (EPDM), sulfonated EPDM, styrene-butadiene rubber, fluorine rubber, various copolymers, and the like.

According to another embodiment of the present disclosure, a lithium secondary battery having a structure in which an electrode assembly is impregnated with a lithium non-aqueous electrolyte, the electrode assembly including: the positive electrode; a negative electrode having a negative electrode mixture layer formed on at least one surface of the negative electrode current collector; and a separator interposed between the positive electrode and negative electrode.

In general, in the negative electrode, a negative electrode mixture layer including a negative electrode active material, a binder, a conductive material, and the like is formed on a negative electrode current collector.

The negative electrode current collector is generally fabricated to a thickness of 3 to 500 micrometers. The negative electrode current collector is not particularly limited so long as a corresponding battery has high conductivity without causing chemical changes in the battery. For example, the negative electrode current collector may be made of copper, stainless steel, aluminum, nickel, titanium, sintered carbon, or a material formed by surface-treating g a surface of copper or stainless steel with carbon, nickel, titanium, silver, or the like, or may use an aluminum-cadmium alloy or the like. In addition, similar to the positive electrode current collector, the negative electrode current collector may have fine protrusions and depressions formed on a surface thereof to enhance adherence of a negative electrode active material, and may be formed in various forms such as a film, a sheet, a foil, a net, a porous body, a foaming body, and a non-woven fabric structure.

An example of the negative electrode active material may include carbons such as hardly graphitizable carbon and graphite-based carbon; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅, a conductive polymer such as polyacetylene; Li-Co-Ni based materials and the like.

Further, the negative electrode may be made of only lithium metal without a current collector, wherein the lithium metal simultaneously functions as a current collector and an active material.

A lithium secondary battery including a negative electrode made of lithium metal or a negative electrode including lithium metal as an active material in a current collector as described above is referred to as a lithium metal battery.

Alternatively, the negative electrode may be simply made of only the current collector as described above.

This negative electrode receives lithium from the positive electrode as the lithium secondary battery is charged, and forms lithium metal on the current collector. A lithium secondary battery including a negative electrode in the form of only the current collector as described above is referred to as a lithium-free battery.

Meanwhile, the separator interposed between the positive electrode and the negative electrode is an insulating thin film having high ion permeability and mechanical strength. The pore diameter of the separator is generally 0.01 to 10 *µ*m, and the thickness is generally 5 to 300 *µ*m. As such separator, for example, chemical resistant and hydrophobic olefin-based polymers such as polypropylene; sheets or non-woven fabrics made of glass fiber or polyethylenere is used. When a solid electrolyte such as a polymer is used as the electrolyte, the solid electrolyte may also serve as a separator.

Further, the separator may be a safety reinforced separator (SRS). The safety reinforced separator (SRS) has a structure in which an organic/inorganic composite porous coating layer is coated onto a polyolefin-based separator substrate.

The inorganic particles and the binder polymer constituting the organic/inorganic composite porous coating layer of the safety reinforced separator (SRS) are similar to those described above, and the disclosure of the applicant's patent application No 10-2009-0018123 is incorporated herein by reference.

The lithium nonaqueous electrolyte generally includes a lithium salt and a nonaqueous solvent. As the non-aqueous solvent, a non-aqueous organic solvent, an organic solid electrolyte, an inorganic solid electrolyte, or the like is used, but is not limited thereto.

As examples of the non-aqueous electrolyte, mention may be made of non-protic organic solvents, such as N-methyl-2-pyrollidinone, propylene carbonate, ethylene carbonate, butylene carbonate, dimethyl carbonate, diethyl carbonate, gamma-butyro lactone, 1,2-dimethoxy ethane, tetrahydroxyfuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte include polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

Examples of the inorganic solid electrolyte include nitrides, halides and sulfates of lithium (Li) such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂.

The lithium salt is a material that is readily soluble in the above-mentioned non-aqueous electrolyte. The lithium salt may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate, and imide.

At this time, the anti-corrosion layer according to the present disclosure is more effective when the imide-based salt is contained as a lithium salt. As described above, this is because when an imide-based salt is contained as a lithium salt, the corrosion of the aluminum current collector is deepened.

Therefore, specifically, the lithium salt may include an imide-based salt selected from the group consisting of lithium bis(fluorosulfonyl)imide (LiFSI), lithium bis(trifluoromethanesulfonyl)imide (LiTFSI), lithium bis(perfluoroethylsulfonyl)imide (LiBETI), lithium (fluorosulfonyl)(nonafluorobutanesulfoyl)imide (LiFNFSI), lithium (fluorosulfonyl)(trifluoromethanesulfonyl)imide (LiFTI or LiFTA). In addition, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like may be added to the non-aqueous electrolyte. In some cases, in order to impart incombustibility, the electrolyte may further include halogen-containing solvents, such as carbon tetrachloride and ethylene trifluoride. Furthermore, in order to improve high-temperature retention characteristics, the electrolyte may further include carbon dioxide gas. In addition, it may further include fluoro-ethylene carbonate (FEC), propene sultone (PRS), and the like.

The lithium secondary battery may be a lithium ion battery or a lithium polymer battery containing various materials other than lithium as a negative electrode active material, a lithium metal battery containing lithium metal as a negative electrode active material, or a lithium-free battery that does not separately contain a negative electrode active material and receives and precipitates lithium ions upon discharge from the positive electrode.

The lithium secondary battery may be used as a power source for a device, and the device may be, for example, a laptop computer, a netbook, a tablet PC, a mobile phone, MP3, a wearable electronic device, a power tool, an electric vehicle (EV), a hybrid electric vehicle (HEV), a plug-in hybrid electric vehicle (PHEV), an electric bike (E-bike), an electric scooter (E-scooter), an electric golf cart, or an electric power storage system, but is not limited thereto.

Hereinafter, the present disclosure is described with reference to examples, but these examples are for easily understanding the invention, and the scope of the present disclosure is not limited thereto.

### <Preparation Example 1> (Primer Layer Precursor Solution)

10 g of CNT (carbon nanotube) as a conductive material was put in 200 g of an NMP solvent, and then dispersed by applying an H-NBR dispersant, and 5 g of PVdF as a binder was mixed to prepare a primer layer precursor solution.

### <Preparation Example 2> (Conductive Polymer Layer Precursor Solution)

10 g of polypyrrole as a conductive polymer was mixed with 100 g of a solvent dimethylformamide (DMF), and the mixture was stirred (40°C) with a magnetic bar for 48 hours to prepare a conductive polymer layer precursor solution.

### <Preparation Example 3> (Conductive Epoxy Layer Precursor Solution)

8331S (two-component electroconductive epoxy adhesive containing silver) available from MG Chemicals was used.

### <Preparation Example 4>

An insulating tape (polyimide film, TAIMIDE, TL-012, thickness: 10 *µ*m) was prepared.

### <Preparation Example 5> (Production of Safety Reinforced Separator (SRS))

About 5 wt.% of a polyvinylidene fluoride-chlorotrifluoroethylene copolymer (PVdF-CTFE) polymer was added to acetone, and then the mixture was dissolved at 50°C for about 12 hours or more to prepare a polymer solution. BaTiO₃ powder was added to this polymer solution so that the ratio of BaTiO₃/PVdFCTFE was 90/10(wt.%), and BaTiO₃ powder was crushed and pulverized using a ball mill method for 12 hours or more to produce a slurry. The BaTiO₃ particle size of the slurry thus produced can be controlled according to the size (particle size) of the beads used in the ball mill method and the application time of the ball mill method, but in Example 1, pulverization was performed to about 400 nm to produce a slurry. The slurry thus produced was coated onto a polyethylene separator having a thickness of 18 *µ*m (porosity 45%) using a dip coating method, and the coating thickness was adjusted to about 3.5 *µ*m. This was dried at 60°C to form an active layer, and as a result of measuring with a porosimeter, the pore size and porosity in the active layer coated on the polyethylene separator were 0.5 *µ*m and 58%, respectively.

### <Example 1>

A positive electrode mixture composed of 95 wt.% of a positive electrode active material (LiNi_{0.6}Co_{0.2}Mn_{0.2}O₂), 2.5 wt.% of Super-P (conductive material), and 2.5 wt.% of PVDF (binder) was added to the solvent NMP (N-methyl-2-pyrrolidone) to prepare a positive electrode slurry, and then coated (100 *µ*m) onto an aluminum current collector substrate, and an aluminum tab was welded to one side of the current collector to produce a positive electrode.

At this time, the primer layer precursor solution prepared in Preparation Example 1 was coated onto the entire surface of the aluminum tab by a spray coating method (thickness: 10 *µ*m) and dried at 60° C to form an anti-corrosion layer.

In addition, lithium metal was used as a negative electrode, and the safety reinforced separator (SRS) obtained in Preparation Example 5 was interposed between the produced positive electrode and the lithium metal negative electrode to produce an electrode assembly, and the electrode assembly was put in a pouch-type case and an electrode lead was connected to the tab. Then, a solution of propylene carbonate (PC) and dimethyl carbonate (DMC) in a volume ratio of 1: 1 in which 1M of LiFSI was dissolved was injected as an electrolyte, and then sealed to assemble monocells, which were then stored at 60°C for 1 hour, and impregnation of the electrolyte solution was performed to manufacture a monocell.

### <Example 2>

A positive electrode and a monocell were manufactured in the same manner as in Example 1, except that in Example 1, the conductive polymer layer precursor solution prepared in Preparation Example 2, instead of the primer layer precursor solution of Preparation Example 1, was coated (thickness: 10 *µ*m) onto the entire surface of the aluminum tab by a bar coating method, and dried at 60°C to form an anti-corrosion layer.

### <Example 3>

A positive electrode and a monocell were manufactured in the same manner as in Example 1, except that in Example 1, the conductive epoxy layer precursor solution prepared in Preparation Example 3, instead of the primer layer precursor solution of Preparation Example 1, was coated (thickness: 10 *µ*m) onto the entire surface of the aluminum tab by a bar coating method, and dried at 60°C to form an anti-corrosion layer.

### <Example 4>

A positive electrode and a monocell were manufactured in the same manner as in Example 1, except that in Example 1, an aluminum tab was welded to one side of the aluminum current collector substrate, the conductive epoxy layer precursor solution prepared in Preparation Example 3 was coated (thickness: 10 *µ*m) onto the entire surface thereof and cured at 65°C to form an anti-corrosion layer.

### <Comparative Example 1>

A positive electrode and a monocell were manufactured in the same manner as in Example 1, except that in Example 1, no treatment was applied to the surface of the aluminum tab.

### <Comparative Example 2>

A positive electrode and a monocell were manufactured in the same manner as in Example 1, except that in Example 1, instead of coating the primer layer precursor solution prepared in Preparation Example 1 onto the entire surface of the aluminum tab, the insulating tape prepared in Preparation Example 4 was attached thereto.

### <Comparative Example 3>

A positive electrode and a monocell were manufactured in the same manner as in Example 1, except that in Example 1, the conductive polymer layer precursor solution prepared in Preparation Example 2 was coated (thickness: 10 *µ*m) onto the entire surface of the aluminum current collector substrate by a bar coating method, and dried at 60°C to form an anti-corrosion layer, and an aluminum tab was welded to one side.

### <Comparative Example 4>

A positive electrode was manufactured in the same manner as in Example 1, except that in Example 1, no treatment was applied to the surface of the aluminum tab, and a monocell was manufactured in the same manner as in Example 1, except that a solution of propylene carbonate (PC) and dimethyl carbonate (DMC) in a volume ratio of 1:1 in which 1 M of LiPF₆ was dissolved was used as an electrolyte.

### <Experimental Example 1>

The monocells manufactured in Examples 1 to 4 and Comparative Examples 1 to 4 were left at 25°C for 1 day, charge and discharge were conducted once under the lower limit voltage of 3V, the upper limit voltage of 4.5V and a current of 0.1C, and then, the initial charge/discharge capacity and the initial efficiency were confirmed, and shown in Table 1 below.

**[Table 1]**

| | Initial charge capacity (mAh/g) | Initial discharge capacity (mAh/g) | Initial efficiency (%) |
|---|---|---|---|
| Example 1 | 231 | 201 | 87.0 |
| Example 2 | 230 | 200 | 87.0 |
| Example 3 | 225 | 203 | 90.2 |
| Example 4 | 227 | 202 | 90.0 |
| Comparative Example 1 | 400 | 125 | 31.3 |
| Comparative Example 2 | 249 | 199 | 79.9 |
| Comparative Example 3 | 278 | 190 | 68.4 |
| Comparative Example 4 | 229 | 198 | 86.5 |

Referring to Table 1, it can be confirmed that in the case of Examples 1 to 4, the initial efficiency is improved as compared with Comparative Examples.

Further, the anti-corrosion layer according to the present disclosure shows conductivity, and thus, as already mentioned, even if the coating region and the welding region of the conductive layer overlap when connecting the tab and the lead as already mentioned, the resistance does not increase, which is considered to be more preferable. On the other hand, in the case of Comparative Examples 1 to 3, it was confirmed that the charge capacity rapidly increases while Al corrosion occurs during charge. Looking at Comparative Example 3, it could be assumed that Al corrosion is prominent in the tab portion.

On the other hand, reviewing the case of Comparative Example 4 (when no imide salt was used), it can be seen that in the case of a battery in which an imide-based salt is applied to an electrolyte, an anti-corrosion layer is necessary particularly in the tab portion.

Based on the above disclosure, it will be understood by those of ordinary skill in the art that various applications and modifications can be made within the scope of the present disclosure.

### [industrial Applicability]

As described above, since the positive electrode current collector according to the present disclosure has a conductive anti-corrosion layer formed on the entire surface of the tab, it is possible to prevent the corrosion and thus secure the battery safety, even if it comes into contact with a lithium non-aqueous electrolyte.

In addition, even if the anti-corrosion layer is formed on the entire surface of the tab, it shows conductivity and thus, does not function as a resistance layer even when a lead is welded to the tab, thereby being able to prevent the deterioration of the battery performance.

## Claims

1. A positive electrode current collector for a lithium secondary battery comprising a tab extended from a positive electrode current collector substrate,
wherein an anti-corrosion layer made of one kind selected from the group consisting of a primer layer, a conductive polymer layer, and a conductive epoxy layer is formed over the entire surface of the tab.

2. The positive electrode current collector according to claim 1, wherein the positive electrode current collector has an anti-corrosion layer made of one kind selected from the group consisting of a primer layer, a conductive polymer layer, and a conductive epoxy layer which is further formed on a part or all of at least one surface of the positive electrode current collector substrate.

3. The positive electrode current collector according to claim 1, wherein the primer layer includes:
at least one conductive material selected from the group consisting of natural graphite, artificial graphite, graphene, carbon black, channel black, furnace black, lamp black, thermal black, carbon nanotube, graphite nanofiber, carbon nanofiber, aluminum, nickel, and a polyphenylene derivative, and
a binding material.

4. The positive electrode current collector according to claim 3, wherein the binding material is at least one selected from the group consisting of polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer (EPDM), sulfonated EPDM, styrene butylene rubber, and fluorine rubber.

5. The positive electrode current collector according to claim 3, wherein the conductive material and the binding material are contained in a weight ratio of 1:99 to 99:1.

6. The positive electrode current collector according to claim 1, wherein the conductive polymer layer includes at least one conductive polymer selected from the group consisting of poly(3,4-ethylenedioxythiophene)/poly(4-styrene sulfonate) (PEDOT/PSS), polyaniline (PANI), polypyrrole (PPy), polythiophene (PT), polyacetylene (PA), and poly para-phenylene vinylene (PPV).

7. The positive electrode current collector according to claim 1, wherein the conductive epoxy layer includes:
at least one conductive filler selected from the group consisting of metal powder of gold, platinum, silver, copper, or nickel; carbon or carbon fiber, graphite; and composite powder thereof, and
a binder.

8. The positive electrode current collector according to claim 7, wherein the binder is at least one selected from the group consisting of acrylic-based, epoxy-based, polyurethane-based, silicon-based, polyimide-based, phenolic-based, polyester-based polymer materials, composite polymer resins thereof, and low melting point glass.

9. The positive electrode current collector according to claim 7, wherein the conductive filler and the binder are contained in a weight ratio of 1:99 to 99: 1.

10. The positive electrode current collector according to claim 1 or 2, wherein a thickness of formation of the anti-corrosion layer is 0.1 *µ*m to 100 *µ*m.

11. The positive electrode current collector according to claim 1, wherein the positive electrode current collector includes Al.

12. A positive electrode having a positive electrode mixture layer formed on at least one surface of the positive electrode current collector according to claim 1.

13. A lithium secondary battery having a structure in which an electrode assembly is impregnated with a lithium non-aqueous electrolyte, the electrode assembly comprising:
the positive electrode according to claim 12;
a negative electrode having a negative electrode mixture layer formed on at least one surface of the negative electrode current collector; and
a separator interposed between the positive electrode and negative electrode.

14. The lithium secondary battery according to claim 13, wherein the lithium non-aqueous electrolyte includes a lithium salt and a non-aqueous solvent, and the lithium salt includes an imide-based salt selected from the group consisting of lithium bis(fluorosulfonyl)imide (LiFSI), lithium bis(trifluoromethanesulfonyl)imide (LiTFSI), lithium bis(perfluoroethylsulfonyl)imide (LiBETI), lithium (fluorosulfonyl)(nonafluorobutanesulfoyl)imide (LiFNFSI), lithium (fluorosulfonyl)(trifluoromethanesulfonyl)imide (LiFTI or LiFTA) .

15. The lithium secondary battery according to claim 13, wherein the lithium secondary battery is lithium ion battery, lithium polymer battery, lithium metal battery, or lithium-free battery.
